# EUROPEAN PATENT APPLICATION

(11) **EP 3 993 478 A1**
(43) Date of publication of application: **04.05.2022**
(21) Application number: 21796479.0
(22) Date of filing: 26.04.2021
(51) Int. Cl.: H04W 16/32, H04W 36/38, H04W 4/00, H04W 76/10, H04W 88/18

(54) **PCF DEVICE, AF DEVICE, NEF DEVICE, AND METHODS FOR SAME**

(30) Priority: 27.04.2020 JP 2020078448
(71) Applicant: NEC Corporation, 108-8001 Tokyo (JP)
(72) Inventor: TAMURA Toshiyuki, Tokyo 108-8001 (JP); OKABE Junya, Tokyo 108-0073 (JP); CHIBA Kazuhiro, Tokyo 108-0073 (JP); SHIMIZU Kouji, Tokyo 108-0073 (JP); NAKAGAWA Tomoki, Tokyo 108-0073 (JP); AOKI Takahiro, Tokyo 108-0073 (JP)
(74) Representative: MacDougall, Alan John Shaw
(86) International application number: PCT/JP2021/016655
(87) International publication number: WO 2021/221016

(57) **Abstract**

A Policy Control Function (PCF) apparatus (34) receives information from a Network Exposure Function (NEF) apparatus (35) or an Application Function (AF) apparatus (41) and modifies based on the information a policy including an Index to RAT/Frequency Selection Priority (RFSP index). This can, for example, contribute to enabling a radio communication network to provide a User Equipment (UE) with a user plane path containing a radio connection in a specific cell based on a request from an AF.

## Description

### Technical Field

This disclosure relates to radio communication networks, and in particular to control of user plane paths.

### Background Art

Patent Literature 1 discloses a handover of a mobile terminal from a macrocell to a small cell in order to enable the mobile terminal to use a special service that is provided only in a particular small cell. In one example disclosed in Patent Literature 1, a mobile terminal camps on a macrocell provided by a radio base station (hereinafter referred to as a macrocell base station) and sends a service establishment request for establishing a specific service to a core network node via the macrocell base station. The core network node is, for example, a Serving GPRS Support Node (SGSN) or a Mobility Management Entity (MME). In response to the reception of the service establishment request from the mobile station, the core network node requests the macrocell base station to establish the requested specific service. The macrocell base station manages a table that indicates which type of specific service is provided in each of the multiple small cells. The macrocell base station selects a small cell associated with the requested specific service based on the table, and determines whether or not the mobile terminal can be handed over to the selected small cell. This judgment is made, for example, based on whether or not the macrocell base station is receiving a signal of a predetermined strength or higher from the mobile terminal. If the macrocell base station determines that the mobile station can be handed over to the selected small cell, it sends a response indicating the failure of service establishment to the core network node and hands over the mobile station to the selected small cell. After the completion of the handover, the radio base station providing the small cell (hereinafter referred to as the small cell base station) notifies the core network node of the completion of the handover. After the completion of the handover, the core network node requests the small cell base station to establish the specific service.

In another example disclosed in Patent Literature 1, the above-described table is managed by a core network node (e.g., SGSN or MME) instead of a macrocell base station. Specifically, in response to the reception of a service establishment request from a mobile terminal via a macrocell base station, the core network node refers to the table associated with the macrocell base station, selects a small cell associated with the requested specific service, and determines whether or not the mobile terminal can be handed over to the selected small cell. This judgment is made, for example, based on whether or not the macrocell base station is receiving a signal of a predetermined strength or higher from the mobile terminal. In the case where the core network node determines that the mobile terminal can be handed over to the selected small cell, it requests the macrocell base station to perform the handover. In response to the handover request from the core network node, the macrocell base station hands over the mobile station from the macrocell to the small cell. After the handover is completed, the small cell base station notifies the core network node of the handover completion. After the completion of the handover, the core network node requests the small cell base station to establish the specific service.

On the other hand, Non-Patent Literature 1 (e.g., Section 5.6.7) and Non-Patent Literature 2 (e.g., Section 4.3.6) disclose Application Function (AF) influence on traffic routing. The AF influence on traffic routing is a control plane solution that enables an AF to provide input to the 5G Core Network (5GC) on how certain traffic should be routed. More specifically, the AF sends requests to the 5GC to influence the routing decisions made by the Session Management Function (SMF) regarding the traffic (i.e., one or more QoS Flows) of a Protocol Data Unit (PDU) session. For example, AF requests affect the User Plane Function (UPF) selection by the SMF, allowing it to route user traffic to local access to the Data Network (DN) identified by the DN Access Identifier (DNAI). The UPF selection by the SMF includes the insertion of a UL Classifier (ULCL) UPF or Branching Point (BP) UPF into the User Plane (UP) path of the PDU session.

### Citation List

### Patent Literature

[Patent Literature 1] WO 2014/013646 A

### Non Patent Literature

[Non-Patent Literature 1] 3GPP TS 23.501 V16.3.0 (2019-12) "3rd Generation Partnership Project; Technical Specification Group Services and System Aspects; System Architecture for the 5G System (5GS); Stage 2 (Release 16)", December 2019
[Non-Patent Literature 2] 3GPP TS 23.502 V16.3.0 (2019-12) "3rd Generation Partnership Project; Technical Specification Group Services and System Aspects; Procedures for the 5G System (5GS); Stage 2 (Release 16)", December 2019

### Summary of Invention

### Technical Problem

The 5G system supports millimeter wave frequency bands from 4.25 GHz to 52.6 GHz, in addition to the frequency bands below 6 GHz (sub-6 GHz) used in Long Term Evolution (LTE). The sub-6 GHz frequency bands are referred to as Frequency Range 1 (FR1) and the millimeter wave frequency bands are referred to as Frequency Range 2 (FR2). The FR2 band allows 5G Next Radio (NR) devices to exchange data over a wider carrier bandwidth and achieve very low scheduling latencies. However, considering the propagation characteristics of millimeter waves, FR2 cells will be local or small cells placed inside a FR1 cell.

The inventors have considered improvements to enable a radio communication network (e.g., a 5G system) to quickly select a specific cell suitable for a specific service (e.g., a cell operating in a specific frequency band (e.g., FR2)) when a radio terminal (hereinafter referred to as User Equipment (UE)) desires that specific service. For example, an application server communicating with an application in a UE via a radio communication network (e.g., a 5G system) can be reported by the UE on the application layer which cells are available to the UE. Therefore, if the application server (or a control server in cooperation therewith) is able to request the radio communication network (e.g., 5G system) to provide the UE with a UP path containing a radio connection in a specific cell (e.g., FR2 cell), this may contribute to an improved user experience.

Patent Literature 1 does not disclose, for example, that the application function (AF) may request the core network to handover the UE to a specific cell (e.g., FR2 cell). On the other hand, the AF influence on traffic routing described in Non-Patent Literature 1 and 2 allows the AF to request the core network to change the UP path. However, Non-Patent Literature 1 and 2 do not disclose any procedure for the AF to request the core network to provide a UP path that includes a radio connection of a specific cell (e.g., FR2 cell).

One of the objects to be attained by embodiments disclosed herein is to provide apparatuses, methods, and programs that contribute to enabling a radio communication network to provide a UP path including a radio connection in a specific cell to a UE based on a request from an application function (AF). It should be noted that this object is merely one of the objects to be attained by the embodiments disclosed herein. Other objects or problems and novel features will be made apparent from the following description and the accompanying drawings.

### Solution to Problem

In a first aspect, an Application Function (AF) apparatus includes at least one memory and at least one processor coupled to the at least one memory. The at least one processor is configured to send a first message to a core network. The first message requests the core network to set up or modify a user plane path to ensure that user data for a User Equipment (UE) is transferred via the user plane path that includes a radio connection in a specific cell.

In a second aspect, the core network apparatus includes at least one memory and at least one processor coupled to the at least one memory. The at least one processor is configured to receive from another core network node a second message based on a request from an Application Function (AF). The at least one processor is further configured to, in response to the second message, request a radio access network (RAN) to set up or modify a user plane path to ensure that user data for a User Equipment (UE) is transferred via the user plane path that includes a radio connection in a specific cell.

In a third aspect, a method performed by an Application Function (AF) apparatus includes sending a first message to a core network. The first message requests the core network to set up or modify a user plane path to ensure that user data for a User Equipment (UE) is transferred via the user plane path that includes a radio connection in a specific cell.

In a fourth aspect, a method performed by a core network apparatus includes the steps of:
(a) receiving from another core network node a second message based on a request from an Application Function (AF); and
(b) in response to the second message, requesting a radio access network (RAN) to set up or modify a user plane path to ensure that user data for a User Equipment (UE) is transferred via the user plane path that includes a radio connection in a specific cell.

In a fifth aspect, a program includes instructions (software codes) that, when loaded into a computer, cause the computer to perform the method according to the above-described third or fourth aspect.

### Advantageous Effects of Invention

According to the above-described aspects, it is possible to provide apparatuses, methods, and programs that contribute to enabling a radio communication network to provide a UP path including a radio connection in a specific cell to a UE based on a request from an application function (AF).

### Brief Description of Drawings

Figure 1 shows a configuration example of a radio communication network according to an embodiment;
Figure 2 is a sequence diagram showing an example of signaling according to an embodiment;
Figure 3A shows an example of a user plane path before dual connectivity or handover is performed;
Figure 3B shows an example of a user plane path after dual connectivity is initiated;
Figure 3C shows an example of a user plane path after dual connectivity is initiated;
Figure 3D shows an example of a user plane path after handover;
Figure 3E shows an example of a user plane path after handover;
Figure 4 is a flowchart showing an example of operation of an application function according to an embodiment;
Figure 5 is a sequence diagram showing an example of signaling according to an embodiment;
Figure 6 is a sequence diagram showing an example of signaling according to an embodiment;
Figure 7 is a sequence diagram showing an example of signaling according to an embodiment;
Figure 8 is a sequence diagram showing an example of signaling according to an embodiment;
Figure 9 is a block diagram showing a configuration example of a RAN node according to an embodiment;
Figure 10 is a block diagram showing a configuration example of a UE according to an embodiment; and
Figure 11 is a block diagram showing a configuration example of an application function according to an embodiment.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3rd Generation Partnership Project (3GPP) fifth generation mobile communication system (5G system (5GS)). However, these embodiments may be applied to other radio communication systems (e.g., LTE systems).

### First Embodiment

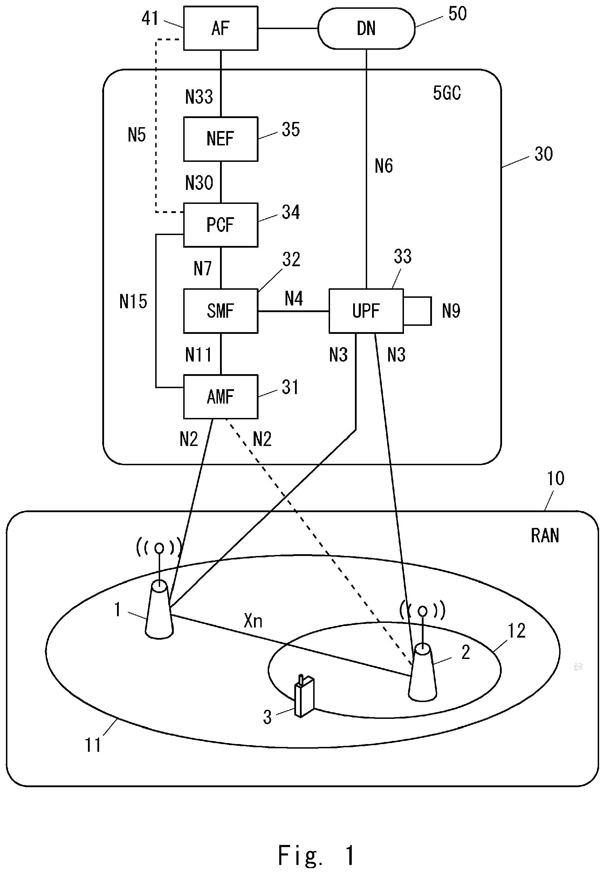

Figure 1 shows a configuration example of a several embodiments, including this embodiment. Each of the elements shown in Figure 1 is a network function and provides an interface as defined by the 3rd Generation Partnership Project (3GPP). Each of the elements (network functions) shown in Figure 1 can be implemented, for example, as a network element on dedicated hardware, as a software instance running on dedicated hardware, or as a virtual function instantiated on an application platform.

The radio communication network shown in Figure 1 may be provided by a Mobile Network Operator (MNO), or it may be a Non-Public Network (NPN) provided by a non-MNO. If the radio communication network shown in Figure 1 is an NPN, it may be an independent network, represented as a Stand-alone Non-Public Network (SNPN), or it may be an NPN linked to an MNO network, represented as a public network integrated NPN.

In the example shown in Figure 1, the radio communication network includes a Radio Access Network (RAN) 10, a 5G Core Network (5GC) 30, and an Application Function (AF) 41. The RAN 10 includes RAN nodes 1 and 2. The 5GC 30 includes an Access and Mobility Management Function (AMF) 31, a Session Management Function (SMF) 32, a User Plane Function (UPF) 33, a Policy Control Function (PCF) 34, and a Network Exposure Function (NEF) 35

Each of the RAN nodes 1 and 2 may be a gNB or a ng-eNB. The RAN nodes 1 and 2 may be Central Units (e.g., gNB-CUs) in cloud RAN (C-RAN) deployment. The RAN node 1 terminates a Control Plane (CP) interface (i.e., N2 interface) with the 5GC 30 and interworks with the AMF 31 in the 5GS 30 over that CP interface. In some implementations, the RAN node 2 may also terminate a CP interface (i.e., N2 interface) with the 5GC 30 and interwork with the AMF 31 on that CP interface. In other implementations, the RAN node 2 may not have a CP interface with any AMF. For example, if the RAN node 2 is responsible for only a secondary node (SN) in Dual Connectivity (DC) in non-standalone deployment, then the RAN node 2 does not need to have a CP interface with 5GC 30.

The RAN node 1 provides one or more cells, including a cell 11, while the RAN node 2 provides one or more cells, including a cell 12. The cell 11 may operate in a different frequency band than the cell 12. For example, the cell 11 may operate in one of the sub-6 GHz frequency bands in FR1, while the cell 12 may operate in one of the millimeter wave frequency bands in FR2. As shown in Figure 1, the cell 12 in the higher frequency band may be a local cell (small cell) located within the cell 11 in the lower frequency band. The cell 11 may completely cover the cell 12 or may partially overlap with the cell 12.

The AMF 31 is one of the network functions in the 5GC control plane. The AMF 31 provides the termination of a RAN CP interface (i.e., the N2 interface). The AMF 31 terminates a single signalling connection (i.e., N1 Non-Access Stratum (NAS) signalling connection) with the UE 3 and provides registration management, connection management and mobility management. In addition, the AMF 31 provides NF services over a service based interface (i.e., Namf interface) to NF consumers (e.g., other AMFs, SMF 32 and Authentication Server Function (AUSF)). Furthermore, the AMF 31 uses NF services provided by other NFs (e.g., Unified Data Management (UDM), Network Slice Selection Function (NSSF), and PCF 34).

The SMF 32 is one of the network functions in the 5GC control plane. The SMF 32 manages PDU sessions. The SMF 32 sends and receives SM signalling messages (NAS-SM messages) to and from the Non-Access-Stratum (NAS) Session Management (SM) layer of the UE 3 via communication services provided by the AMF 31. The SMF 32 provides NF services on a service-based interface (i.e., Nsmf interface) to NF consumers (e.g., AMF 31, other SMFs). The NF services provided by the SMF 32 include a PDU session management service (Nsmf_PDUSession), which allows the NF consumer (e.g., AMF 31) to handle PDU sessions. The SMF 32 may be an Intermediate SMF (I-SMF). The I-SMF is inserted between the AMF 31 and an original SMF as needed when the UPF 33 belongs to a different SMF service area and cannot be controlled by the original SMF.

The UPF 33 is one of the network functions in the 5GC user plane. The UPF 33 processes and forwards user data. The functionality of the UPF 33 is controlled by the SMF 32. The UPF 33 is interconnected with a data network (DN) 50 and acts as an anchor point towards the DN 50 for one or more PDU sessions of the UE 3. The UPF 33 may include a plurality of UPFs interconnected via N9 interfaces. More specifically, the UP path for a PDU session of the UE 3 may include one or more PDU Session Anchor (PSA) UPFs, may include one or more Intermediate UPFs (I-UPFs), and may include one or more Uplink Classifier (UL CL) UPFs (or Branching Point (BP) UPFs).

The PCF 34 provides a variety of policy controls, including policy controls for session management related functions and access and mobility related functions. For example, the PCF 34 interacts with the AF 41 directly (via an N5 interface) or via an NEF 35, and with the SMF 32 (via an N7 interface), for session management related policy control.

The NEF 35 has a role similar to Service Capability Exposure Function (SCEF) of the Evolved Packet System (EPS). Specifically, the NEF 35 supports the exposure of services and capabilities from the 5G system to applications and network functions inside and outside the operator network.

The radio terminal (i.e., UE) 3 uses 5G connectivity services to communicate with the data network (DN) 50. More specifically, the UE 3 is connected to the RAN 10 and communicates with the DN 50 in the application layer via the UPF 33 in the 5GC 30. The term "application layer" in this specification refers to all protocol layers above the PDU session (PDU session layer) between the UE 3 and the DN 50 provided by the 5GS. For example, if the PDUs are IP packets, the application layer includes not only application protocols such as Hypertext Transfer Protocol (HTTP) and File Transfer Protocol (FTP), but also transport layer protocols (e.g., User Datagram Protocol (UDP) and Transmission Control Protocol (TCP)) between the IP and the application protocols.

The AF 41 interacts with the PCF 34 to request the 5GC 30 to take policy control over the PDU session of the UE 3. As described above, the AF 41 interacts with the PCF 34 either directly or via the NEF 35. In addition, in the example of Figure 1, the AF 41 can communicate with an application (UE application) running on the processor of the UE 3 via the DN 50 (e.g., the internet, or other IP network) and the PDU session between the DN 50 and the UE 3. The AF 41 may include one or more computers. For example, the AF 41 may include one or more servers (e.g., content delivery servers, online game servers) that communicate with the UE 3 in the application layer, and a controller (i.e., the AF in the 3 GPP definition) that works with these one or more servers and interacts with the 5GC 30 (e.g., PCF 34). In addition, the AF 41 may include a plurality of servers deployed in distributed locations. For example, the AF 41 may include, in addition to a central server, one or more edge computing servers located near the RAN 10. The edge computing servers and the local UPFs, which provide steering of user plane traffic for local access to the edge computing servers, may be collocated with any of the RAN nodes or may be co-located at a network aggregation site between the RAN 10 and the CN 30.

The configuration example in Figure 1 shows only typical NFs for convenience of explanation. The radio communication network may include other NFs that are not shown in Figure 1.

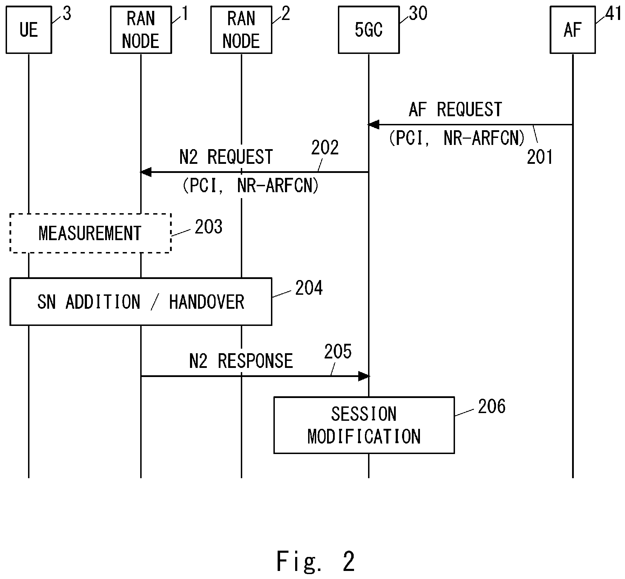

Figure 2 shows an example of the signaling in this embodiment. Following the procedure in Figure 2, based on a request from the AF 41, the 5GC 30 and the RAN 10 set up or modify a UP path to ensure that user data belonging to a PDU session of the UE 3 is transferred via that UP path including a radio connection (e.g., data radio bearer (DRB)) of a specific cell. The user data belonging to the PDU session of the UE 3 may be one or more Quality of Service (QoS) flows.

The UP path includes an N3 tunnel between the UPF 33 (specifically PSA UPF) in the 5GC 30 and the RAN 10 (specifically RAN node 1 or 2), and a radio connection (DRB) between the RAN 10 (specifically RAN node 1 or 2) and the UE 3. If multiple UPFs are used for the PDU session, the UP path may also include one or more N9 tunnels between the UPFs. The N3 and N9 tunnels may be General Packet Radio Service (GPRS) Tunnelling Protocol for User Plane (GTP-U) tunnels.

The procedure shown in Figure 2 is initiated (or triggered) by the AF 41 when the UE 3 camps on the cell 11 (e.g., FR1 macrocell) provided by the RAN node 1. The AF 41 requests the 5GC 30 to move the traffic (i.e., one or more QoS flows) belonging to the PDU session of the UE 3 to a UP path passing through the cell 12 (e.g., FR2 station cell) provided by the RAN node 2. Therefore, here the specific cell is the cell 12 provided by the RAN node 2.

In step 201, the AF 41 sends an AF request to the 5GC 30. Specifically, the AF 41 sends an AF request to the PCF 34 directly or via the NEF 35. The AF request requests the 5GC 30 to set up or modify the UP path in such a way that the user data belonging to the PDU session for the UE 3 is transferred via that UP path including a radio connection in the cell 12. In other words, the AF request requests the 5GC 30 to modify the established PDU session in such a way that the user data belonging to the established PDU session for the UE 3 is forwarded via the UP path including the radio connection of the cell 12.

In some implementations, the AF request may cause the 5GC 30 to control the RAN 10 to add the cell 12 as a secondary cell (Secondary Cell Group (SCG) cell) of dual connectivity (DC) for the UE 3. In other words, the AF 41 may request the 5GC 30 via the AF request to add the cell 12 as an SCG cell of DC for the UE 3.

Dual connectivity allows a UE to simultaneously use the Master Cell Group (MCG) provided by the Master Node (MN) (e.g., RAN node 1) and a Secondary Cell Group (SCG) provided by a Secondary Node (SN) (e.g., RAN node 2). The MCG is a group of serving cells associated with (or provided by) a RAN node (e.g., RAN Node 1) acting as the MN of DC, and includes SpCell (i.e., Primary Cell (PCell)) and optionally one or more Secondary Cells (SCells). Meanwhile, the SCG is a group of serving cells associated with (or provided by) a RAN node (e.g., RAN node 2) acting as an SN of DC, and includes the primary cell of the SCG and optionally one or more Secondary Cells (SCells). The primary cell of the SCG is referred to as Primary SCG cell (PSCell) or Primary Secondary Cell (PSCell). The PSCell is the Special Cell (SpCell) of the SCG.

In other implementations, the AF request may cause the 5GC 30 to control the RAN 10 to hand over the UE 3 to the cell 12. In other words, the AF 41 may request the 5GC 30 through the AF request to hand over the UE 3 to the cell 12.

In some implementations, the AF 41 may include in the AF request a cell identifier (e.g., Physical Cell ID (PCI)) that uniquely identifies the cell 12. The AF 41 may also include in the AF request a list of cell identifiers. In this case, the 5GC 30 (e.g., SMF 32) or RAN 10 (e.g., RAN node 1) may select one or more specific cells (including the cell 12) from the list of cell identifiers.

Additionally or alternatively, the AF 41 may include a list of identifiers (e.g., NR Absolute Radio Frequency Channel Numbers (NR-ARFCNs)) of one or more frequency bands in the AF request. In this case, the 5GC 30 (e.g., SMF 32 or AMF 31) or RAN 10 (e.g., RAN node 1) may select one or more specific cells (including the cell 12) that are operating in one of the frequency bands included in that list of frequency band identifiers. Additionally or alternatively, the AF 41 may include an Index to RAT/Frequency Selection Priority (RFSP index) in the AF request. The RFSP index is used, for example, by the RAN 10 to derive UE-specific cell reselection priorities to control camping in idle mode. Alternatively, the RFSP index may be used by the RAN 10 to decide to redirect a UE in connected mode (active mode) to a different frequency layer or a different RAT. The RAN 10 may select one or more specific cells (including the cell 12), each operating in any frequency band that is selected based on the RFSP index indicated by the AF 41. In addition or alternatively, the AF 41 may include in the AF request an Additional Radio Resource Management (RRM) Policy Index (ARPI). The ARPI is used by RAN 10 to set priorities for the allocation of RAN resources to UEs.

The AF request in step 201 may include other information elements. More specifically, the AF request may include an identifier of the UE 3. The identifier of the UE 3 may be a Generic Public Subscription Identifier (GPSI), such as a Mobile Subscriber Integrated Services Digital Network Number (MSISDN) or an external identifier. The AF request may include an identifier of the PDU session (e.g., PDU Session ID). The AF request may include information (e.g., 5-tuple) to identify one or more QoS flows contained in the PDU session. The AF request may contain a combination of a Data Network Name (DNN) and a Single Network Slice Selection Assistance Information (S-NSSAI). The DNN is an identifier that indicates the DN (e.g., DN 50) to which the traffic of the UE 3 should be routed. The S-NSSAI is an identifier of a network slice. The AF request may include a list of one or more DN Access Identifiers (DNAIs). The DNAI(s) represent access locations to the DN.

One or both of the 5GC 30 (e.g., PCF 34, SMF 32, AMF 31) and the RAN 10 (e.g., RAN node 1) may manage the PCI, the list of NR-ARFCNs, the RFSP index, and the ARPI configured in the AF request on a per UE, per PDU session, per S-NSSAI, per QoS Flow Identifier (QFI), per DN, or per DNN (per APN). If the AMF 31 receives and maintains the RFSP index (and ARPI) from the UDM, for example, the AMF 31 may use the RFSP index and ARPI specified by the AF 41 only when dealing with a specific PDU session, a specific S-NSSAI, a specific QFI, a specific DN, or a specific DNN (specific APN) as specified by the AF 41. Similarly, if the RAN 10 receives and maintains the RFSP index (and ARPI) from the UDM, for example, the RAN 10 may use the RFSP index (and ARPI) specified by the AF 41 only when dealing with a specific PDU session, a specific S-NSSAI, a specific QFI, a specific DN, or a specific DNN (specific APN) as specified by the AF 41.

In some implementations, the AF 41 may receive a report from the UE 3 via communication in the application layer and, based on that report, determine whether the specific cell (e.g., cell 12) is available to the UE 3. The report from the UE 3 may include one or any combination of the following: the current location of the UE 3, a list of cells measured or detected by the UE 3, and a measurement of the radio quality of each of the one or more cells. The radio quality may be, for example, Reference Signal Received Power (RSRP) or Reference Signal Received Quality (RSRQ). Then, in response to the determination that the specific cell (e.g., cell 12) is available to the UE 3, the AF 41 may send the AF request of step 201. Such an action prevents the AF request from being sent to the 5GC 30 with a low chance of success.

In response to the reception of the AF request, the 5GC 30 sends an N2 request to the RAN node 1 within the RAN 10. More specifically, the PCF 34 receives the AF request directly or via the NEF 35, makes a policy decision based on the AF request, and determines that updated or new Session Management (SM) policy information needs to be sent to the SMF 32. The updated or new SM policy information may include the PCI(s), NR-ARFCN(s), RFSP index, or ARPI sent from the AF 41. The PCF 34 then provides that updated or new SM policy information to the SMF 32. The PCF 34 may issue an Npcf_SMPolicyControl_UpdateNotify request with that updated or new SM policy information.

The SMF 32 receives from the PCF 34 the SM policy information updated or generated based on the AF request. The SMF 32 may interact with the UPF 33 to change the UP path of one or more QoS flows belonging to the established PDU session of the UE 3. For example, the SMF 32 may decide to use a split PDU session, request the UPF 33 to set up a new N3 tunnel and provide the UPF 33 with a new packet detection and forwarding rule in order to route existing or additional QoS flows to the RAN node 2. Additionally or alternatively, the SMF 32 may decide to insert a UL CL UPF and an additional PSA UPF into the UP path of the established PDU session of the UE 3. In this case, the SMF 32 may provide an N9 tunnel configuration for the insertion of the UL CL UPF and the additional PSA UPF, as well as a packet detection and forwarding rule, to the UPF 33.

In step 202, the 5GC 30 sends an N2 request to the RAN node 1. This N2 request may be a PDU SESSION RESOURCE MODIFY REQUEST message. The N2 request may include one or any combination of the cell identifier, frequency band identifier, RFSP index, and ARPI of the cell 12. In this way, the N2 request requests the RAN node 1 to set up or modify the user plane path so that the user data belonging to the PDU session for the UE 3 is transferred via the UP path including a radio connection of the cell 12. In some implementations, the N2 request may request the RAN node 1 to add the cell 12 as an SCG cell in DC for the UE 3.

More specifically, the SMF 32 performs (or invokes) Namf_Communication_N1N2MessageTransfer and sends N2 SM information and an N1 SM container to the AMF 31. The N1 SM container contains a PDU Session Modification Command message to be sent to the UE 3. Meanwhile, the N2 SM information contains information needed for the routing of the QoS flows to be added or updated (e.g., PDU Session ID, QoS Flow Identifier(s) (QFI(s)), and QoS Profile(s), CN Tunnel Info). The CN Tunnel Info indicates an N3 (GTP-U) tunnel endpoint of the UPF 33. The N2 SM information may further include the PCI(s), NR-ARFCN(s), RFSP index, or ARPI sent from the AF 41. As described above, the SMF 32 may receive a list of PCIs or a list of NR-ARFCNs. In this case, the SMF 32 may select one PCI or NR-ARFCN from that list and include the selected one in the N2 SM information. The N2 SM information may explicitly indicate that dual connectivity or handover is required. Alternatively, SMF 32 may include, within the Namf_Communication_N1N2MessageTransfer, a cause indicating that dual connectivity or handover is required.

The RAN node 1 receives the N2 request from the AMF 31 and decides to add the cell 12 as an SCG cell in DC for the UE 3 or to hand over the UE 3 to the cell 12. In step 203, the RAN node 1 may make the UE 3, which is in Radio Resource Control (RRC)_CONNETED, perform an inter-frequency measurement. The RAN node 1 may create an inter-frequency measurement configuration to allow the UE 3 to measure the frequency band in which the cell 12 is operating. More specifically, the RAN node 1 may create a configuration (e.g., measurement gap) needed to measure the frequency band in which the cell 12 operates (e.g., FR2 band), taking into account the radio capabilities of the UE 3 (e.g., the number of Radio Frequency (RF) chains in the UE 3). The RAN node 1 may send to the UE 3 an RRC message containing the created configuration for inter-frequency measurement. The RRC message may be an RRC Reconfiguration message. If the RAN node 1 has already received measurement results from the UE 3, the measurement in step 203 may be skipped.

In step 204, the RAN node 1 performs a Secondary Node (SN) addition procedure to add the cell 12 as a secondary cell (SCG cell). More specifically, the RAN Node 1 sends a SN Addition Request message to the RAN Node 2. The RAN Node 2 sends a SN Addition Request Acknowledge message to the RAN Node 1. The SN Addition Request Acknowledge message contains an SN RRC message. The RAN node 1 then sends a Master Node (MN) RRC Reconfiguration message to the UE 3. The MN RRC Reconfiguration message contains the SN RRC message received from the RAN node 2 and contains the N1 SM container (PDU Session Modification Command) received from the AMF 31.

Subsequently, with respect to the radio bearer in the cell 12, the RAN node 1 (or the RAN node 2) updates the UP path to the 5GC (UPF 33) through a PDU session path update procedure. Specifically, in step 205, the RAN node 1 sends an N2 response to the AMF 31. This N2 response may be a PDU SESSION RESOURCE MODIFY RESPONSE message. The N2 response contains N2 SM information. This N2 SM information includes AN Tunnel Info that indicates an N3 (GTP-U) tunnel endpoint of the RAN Node 2, which is the SN of the DC. In step 206, the AMF 31 forwards the N2 SM information received from the RAN node 1 to the SMF 32, and the SMF 32 updates the UPF 33 based on that N2 SM information. This allows the UE 3 to perform DC using the cell 11 as the Master Cell Group (MCG) cell and the cell 12 as the SCG cell.

Alternatively, in step 204, if the cell 12 is available at the location of the UE 3, the RAN node 1 may initiate a handover procedure to move the UE 3 to the cell 12. More specifically, the RAN node 1 sends a Handover Request message to the RAN node 2. The RAN node 2 sends a Handover Request Acknowledge message to the RAN node 1. This Handover Request Acknowledge message contains a transparent container (i.e., a Handover Command message) to be sent to the UE 3. The RAN node 1 forwards the Handover Command message to the UE 3. In steps 205 and 206, after the handover of the UE 3 is completed, with respect to the radio bearer of the cell 12, the RAN node 2 (or the RAN node 1) updates the UP path to the 5GC (User Plane Function (UPF)) through a PDU session path update procedure. This allows the UE 3 to communicate with the DN 50 via the UP path, including the radio connection in the cell 12.

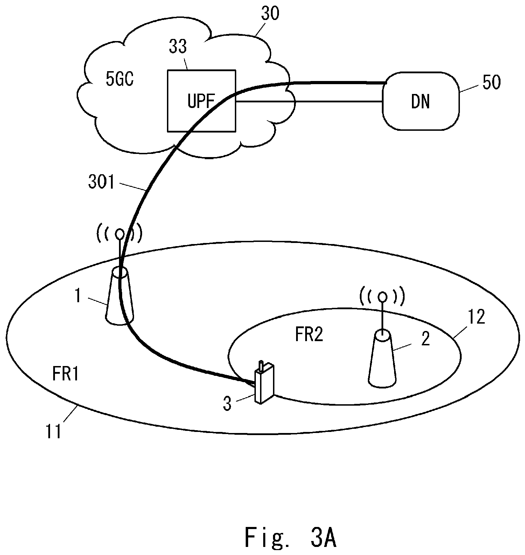

The following paragraphs describe specific examples of the change in the UP path with reference to Figures 3A to 3E. In the example shown in Figures 3A to 3E, the cell 11 may operate in the FR1 band (sub-6 GHz) and the cell 12 may operate in the FR2 band (e.g., 28 GHz). Figure 3A shows the UP path before the UP path change involving dual connectivity or handover is performed. The UP path 301 shown in Figure 3A is used for the transfer of all the QoS flows belonging to the PDU session between the DN 50 and the UE 3. The UP path 301 includes a radio connection (DRB) in the cell 11 and an N3 tunnel between the RAN node 1 and the UPF 33.

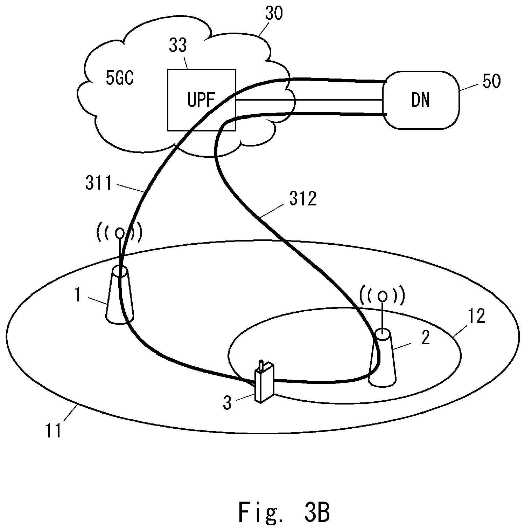

Figure 3B shows the UP path after dual connectivity has been initiated, using the cell 11 as the MCG cell and the cell 12 as an SCG cell. The UP path 311 shown in Figure 3B is the same as the UP path 301 in Figure 3A and is used for forwarding one or more QoS flows that have been configured before the DC. On the other hand, the UP path 312 is used for one or more newly added QoS flows among QoS flows belonging to the PDU session between the DN 50 and the UE 3. The UP path 312 includes a radio connection (DRB) in the SCG cell 12, and an N3 tunnel between the RAN node 2 and the UPF 33.

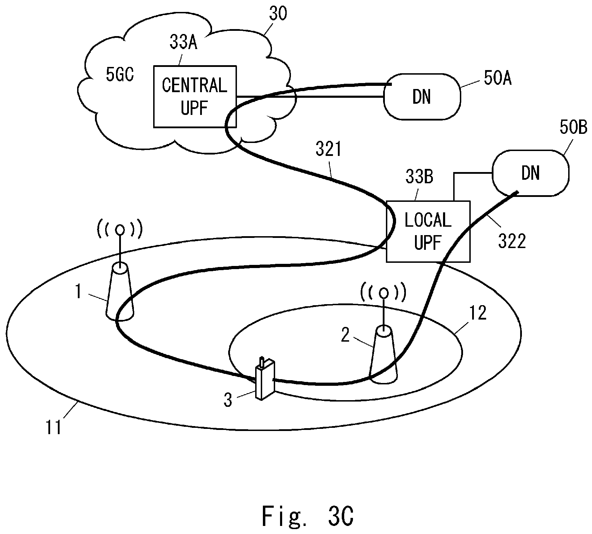

Figure 3C also shows the UP path after dual connectivity has been initiated, but in Figure 3C, a local UPF 33B is inserted. The local UPF 33B acts as a UL CL and an additional PSA. This allows the local UPF 33B to forward the uplink traffic of one or more newly added QoS flows to a DN 50B for local access via the UP path 322. In addition, the local UPF 33B can forward the uplink traffic of one or more QoS flows already configured before the DC to a DN 50A through a central UPF 33A via the UP path 321. The DN 50A and the DN 50B are the same DN. Besides, the PDU session is split at the local UPF 33B. The local UPF 33B forwards the downlink traffic of one or more QoS flows already configured before the DC to the RAN node 1 (MN) and forwards the downlink traffic of one or more newly added QoS flows to the RAN node 2 (SN).

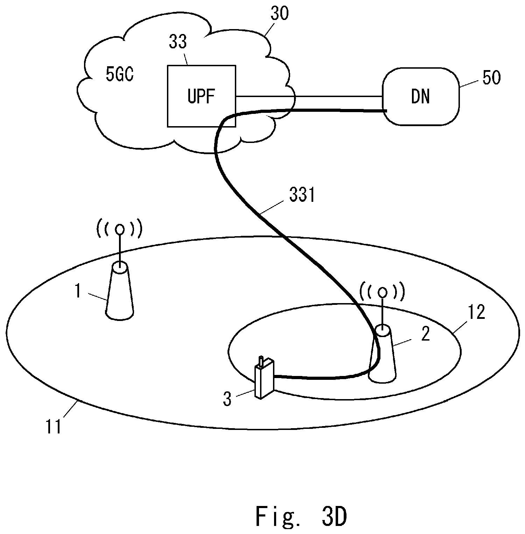

Figure 3D shows the UP path after the UE 3 has been handed over from the cell 11 to the cell 12. The UP path 331 shown in Figure 3D is used for one or more QoS flows that have been configured before the DC, plus one or more newly added QoS flows. The UP path 331 includes a radio connection (DRB) in the cell 12, and an N3 tunnel between the RAN node 2 and the UPF 33.

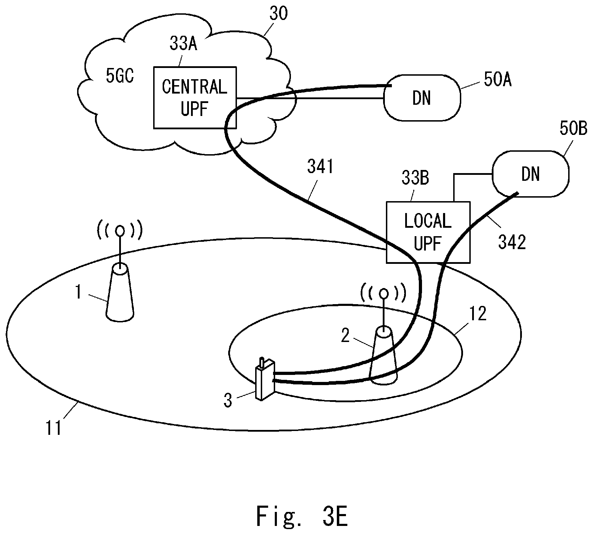

Figure 3E also shows the UP path after handover completion, but in Figure 3E, a local UPF 33B is inserted. The local UPF 33B in Figure 3E acts as a UL CL and additional PSA. This allows the local UPF 33B to forward the uplink traffic of one or more newly added QoS flows to the DN 50B for local access via the UP path 342. In addition, the local UPF 33B can forward the uplink traffic of one or more QoS flows already configured before the DC to the DN 50A through the central UPF 33A via the UP path 341. The DN 50A and the DN 50B are the same DN. The local UPF 33B merges the downlink traffic of all the QoS flows of the PDU session of the UE 3 into the N3 tunnel between the local UPF 33B and the RAN node 2 (which is common to the UP paths 341 and 342).

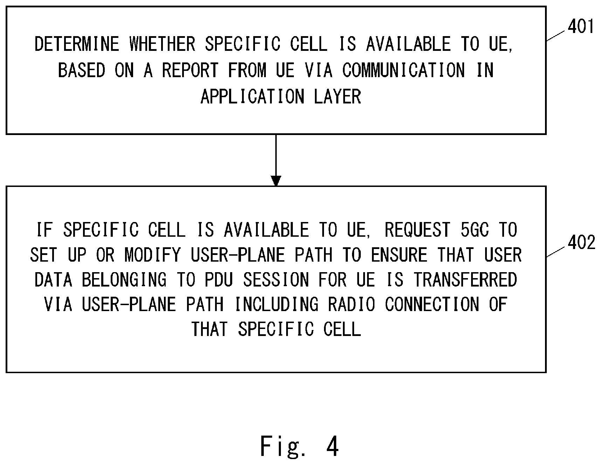

Figure 4 shows an example of the operation of the AF 41. In step 401, the AF 41 receives a report from the UE 3 via communication in the application layer and, based on the report, determines whether a specific cell (e.g., cell 12) is available to the UE 3. The report from the UE 3 may indicate location information of the UE 3 obtained by the UE 3 (e.g., Global Positioning System (GPS) location information). Additionally or alternatively, the report from the UE 3 may include a list of cells that have been measured or detected by the UE 3. The list may indicate a cell identifier for each detected cell, and may indicate the frequency band in which each cell operates. Additionally or alternatively, the report from the UE 3 may include the measured radio quality (e.g., RSRP or RSRQ) of one or more cells. Additionally or alternatively, the report from the UE 3 may include a cell identifier representing the serving cell to which the UE 3 is currently connected (or in communication). Additionally or alternatively, the report from UE 3 may indicate a UE radio capability. The radio capability of the UE can be used to know which NR frequency bands the UE supports, and whether the UE supports DC or not.

In response to the decision in step 401, the AF 41 requests the 5GC 30 to set up or modify the UP path to ensure that the user data belonging to the PDU session for the UE 3 is transferred via the UP path including a radio connection of the specific cell.

As can be understood from the above description, the signaling described in this embodiment allows the radio communication network (5GC 30 and RAN 10) to provide the UE 3 with a UP path containing a radio connection of a specific cell (e.g., FR2 cell, cell 12) based on a request from the AF 41.

Second Embodiment

A configuration example of a radio communication network pertaining to this embodiment is similar to that described with reference to Figure 1. This embodiment provides a specific example of the operation of the UE 3, AF 41, and 5GC 30.

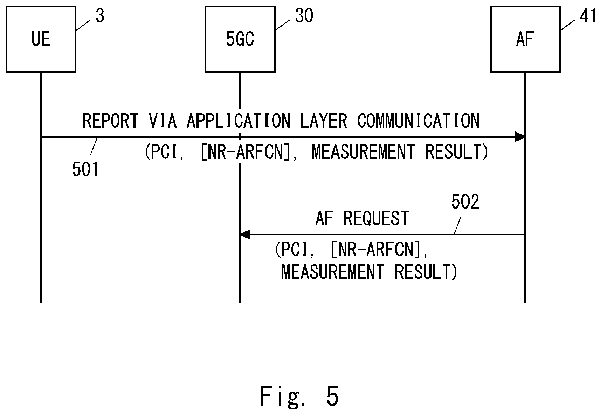

Figure 5 shows an example of signaling in this embodiment. In step 501, the AF 41 receives a report from the UE 3 via communication in the application layer. The report includes identifiers (e.g., PCIs) of one or more cells detected by the UE 3. The report further contains the results of radio quality measurements (e.g., RSRP or RSRQ) of these cells. The report may also include frequency band identifiers (e.g., NR-ARFCNs) of one or more cells detected by the UE 3. If the AF 41 has previously specified a frequency band(s) to be measured by the UE 3, the report does not have to include the frequency band identifiers of the detected cells.

In step 502, the AF 41 requests the 5GC 30 to modify an established PDU session, based on the report from the UE 3, in such a way that the user data belonging to the established PDU session for the UE 3 is transferred via a UP path including a radio connection of a specific cell (e.g., cell 12). In other words, the AF 41 requests the 5GC 30 to perform dual connectivity for the UE 3 using a specific cell as an SCG cell or handover of the UE 3 to a specific cell. The AF request sent by the AF 41 in step 502 contains a list of one or more specific cells (a list of cell identifiers (e.g., PCIs)) and further contains the measurement results of these specific cells. The AF request may contain a list of frequency band identifiers (e.g., NR-ARFCNs) for the one or more specific cells. The AF request may include an RFSP index (and ARPI). Furthermore, the AF request may contain other information elements needed to request the 5GC 30 to change a QoS flow of the UE 3. More specifically, the AF request may include an identifier of the UE 3 (e.g., GPSI) and QoS flow information (e.g., 5-tuple). In addition, the AF request may include a DNN and an S-NSSAI, or a list of one or more DNAIs.

The signaling in Figure 5 allows the SMF 32 or RAN node 1 to consider the measurement results of a specific cell received from the AF 41 when it changes an UP path based on an AF request. For example, the SMF 32 or RAN node 1 may determine whether or not to perform dual connectivity or handover to change the UP path based on the received measurement results. For example, based on the received measurement results, the SMF 32 or RAN node 1 may select one specific cell, which is preferred for the UE 3, from a list of specific cells.

### Third Embodiment

A configuration example of a radio communication network pertaining to this embodiment is similar to that described with reference to Figure 1. This embodiment provides a specific example of the operation of the UE 3, AF 41, and 5GC 30.

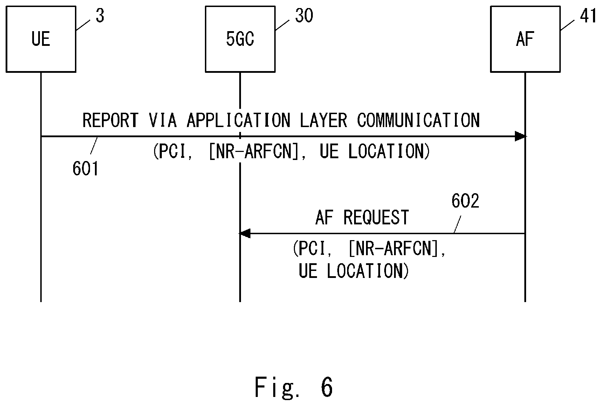

Figure 6 shows an example of signaling in this embodiment. In step 601, the AF 41 receives a report from the UE 3 via communication in the application layer. The report includes identifiers (e.g., PCIs) of one or more cells detected by the UE 3. The report further contains information indicating the current location of the UE 3. This information may be GPS location information or a cell identifier representing the serving cell to which the UE 3 is currently connected (or in communication). The report may include frequency band identifiers (e.g., NR-ARFCNs) of one or more cells detected by the UE 3. If the AF 41 has previously specified a frequency band(s) to be measured by the UE 3, the report does not have to include the frequency band identifiers of the detected cells.

In step 602, the AF 41 requests the 5GC 30 to modify an established PDU session, based on the report from the UE 3, in such a way that the user data belonging to the established PDU session for the UE 3 is transferred via a UP path including a radio connection of a specific cell (e.g., cell 12). In other words, the AF 41 requests the 5GC 30 to perform dual connectivity for the UE 3 using a specific cell as an SCG cell or handover of the UE 3 to a specific cell. The AF request sent by the AF 41 in step 602 includes a list of one or more specific cells (a list of cell identifiers (e.g., PCIs) and further includes information indicating the current location of the UE3. The AF request may contain a list of frequency band identifiers (e.g., NR-ARFCNs) for the one or more specific cells. The AF request may include an RFSP index (and ARPI). Furthermore, the AF request may contain other information elements needed to request the 5GC 30 to change a QoS flow of the UE 3. More specifically, the AF request may include an identifier of the UE 3 (e.g., GPSI) and QoS flow information (e.g., 5-tuple). In addition, the AF request may include a DNN and an S-NSSAI, or a list of one or more DNAIs.

The signalling in Figure 6 allows the SMF 32 or RAN node 1 to consider the current location of the UE 3 when changing a UP path based on an AF request. For example, SMF 32 or RAN node 1 may determine whether or not to perform dual connectivity or handover to change the UP path based on the current location of the UE 3. For example, SMF 32 or RAN node 1 may select one specific cell, which is preferred for the UE 3, from a list of specific cells based on the current location of the UE 3.

### Fourth Embodiment

A configuration example of a radio communication network pertaining to this embodiment is similar to that described with reference to Figure 1. This embodiment provides a specific example of the operation of the UE 3, RAN 10, 5GC 30, and AF 41.

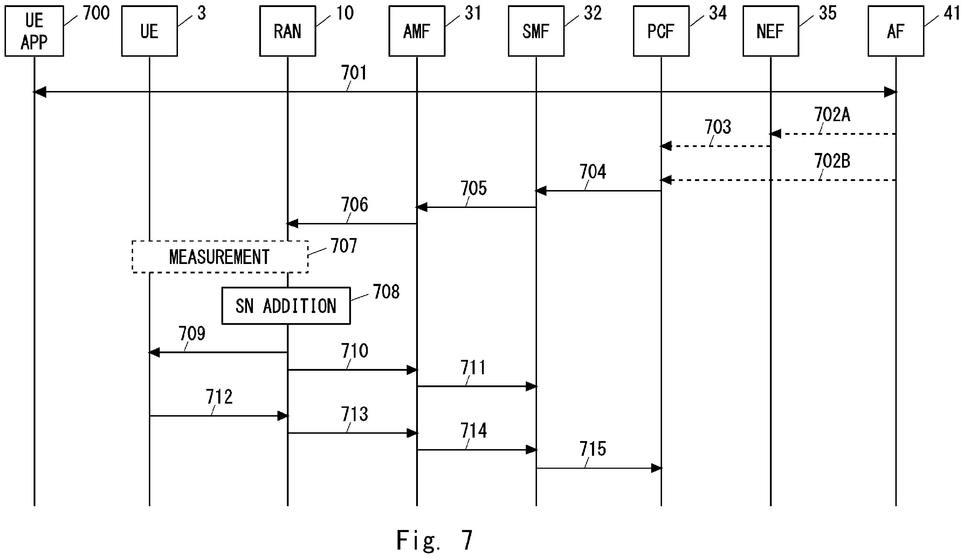

Figure 7 shows an example of signaling to initiate dual connectivity based on a request from the AF 41. In step 701, the AF 41 communicates with one or more applications 700 (UE applications) running on the UE 3. For example, the AF 41 may communicate with the UE application 700 via an application layer over a PDU session between the DN 50 and the UE 3. The AF 41 may receive a request from the UE application 700 for a specific service (e.g., high volume content delivery, online gaming). The AF 41 may receive from the UE application 700 a list of one or more specific cells, a list of frequency bands in which these specific cells are operating, the measurement results of these specific cells by the UE 3 , or the current position of the UE 3 , or any combination of these.

In steps 702A and 703, the AF 41 sends an AF request to the PCF 34 via the NEF 35. In step 702A, the AF 41 may perform (or invoke) an Nnef_SMPolicyControl_Update to send the AF request to the NEF 35. In step 703, the NEF 35 may perform an Npcf_SMPolicyControl_Update to forward the AF request to the PCF 34.

Instead of steps 702A and 703, the AF 41 may perform step 702B. That is, the AF 41 may send the AF request directly to the PCF 34. In step 702B, the AF 41 may perform an Npcf_SMPolicyControl_Update to send the AF request to the PCF 34.

In step 704, the PCF 34 generates updated or new SM policy information based on the AF request and provides it to the SMF 32. The PCF 34 may perform an Npcf_SMPolicyControl_UpdateNotify request to send the updated or new SM policy information to the SMF 32.

The SMF 32 generates N2 SM information and an N1 SM container based on the updated or new SM policy information. The N1 SM container contains a PDU Session Modification Command to be sent to the UE 3. Meanwhile, the N2 SM information contains information needed for the routing of the QoS flows to be added or updated (e.g., PDU Session ID, QoS Flow Identifier(s) (QFI(s)), and QoS Profile(s), CN Tunnel Info). The SMF 32 may interact with the UPF 33 to change a UP path for one or more QoS flows belonging to an established PDU session of the UE 3. In step 705, the SMF 32 sends the N2 SM information and the N1 SM container to the AMF 31 in order to forward them to the RAN 10. The SMF 32 may perform an Namf_Communication_N1N2MessageTransfer.

In step 706, the AMF 31 generates an N2 request containing the N2 SM information and N1 SM container received from the SMF 32, and sends it to the RAN 10 (i.e., RAN node 1). The N2 request may be a PDU SESSION RESOURCE MODIFY REQUEST message.

The messages of steps 702A (or 702B), 703, 704, 705, and 706 may indicate one or any combination of PCI, list of NR-ARFCNs, RFSP index, and ARPI. These are associated with the UE application 700. This makes it possible to supply the RAN 10 with RAN related information contained in the AF request from the AF 41.

Steps 707 and 708 are similar to steps 203 and 204 in Figure 2. In the example of Figure 7, the RAN node 1 receives the N2 request from the AMF 31 and decides to add the cell 12 as an SCG cell in DC for the UE 3. In step 707, the RAN node 1 may have the UE 3, which is in Radio Resource Control (RRC)_CONNETED, perform an inter-frequency measurement. If the RAN node 1 has already received measurement results from the UE 3, then the measurement in step 707 may be skipped. In step 708, the RAN node 1 communicates with the RAN node 2 and performs a Secondary Node (SN) add procedure to add the cell 12 as a secondary cell (SCG cell).

In step 709, the RAN node 1 sends an MN RRC Reconfiguration message to the UE 3. This MN RRC Reconfiguration message contains an SN RRC message received from the RAN node 2 and the N1 SM container (PDU Session Modification Command) received from the AMF 31.

In step 710, the RAN node 1 sends an N2 response to the AMF 31. The N2 response may be a PDU SESSION RESOURCE MODIFY RESPONSE message. The N2 response contains N2 SM information. This N2 SM information includes AN Tunnel Info that indicates an N3 (GTP-U) tunnel endpoint of the RAN Node 2, which is the SN of the DC.

In step 711, the AMF 31 forwards the N2 SM information received from the RAN node 1 to the SMF 32, and the SMF 32updates the UPF 33 based on the N2 SM information. The AMF 31 may perform an Nsmf_PDUSession_UpdateSMContext Request.

In step 712, the UE 3 sends an MN RRC Reconfiguration Complete message to the RAN node 1. The MN RRC Reconfiguration Complete message contains an SN RRC response message for the SN, and further contains a NAS message. The RAN node 1 (MN) indicates the successful completion of the reconfiguration procedure for the UE 3 to the RAN node 2 (SN) via an SN Reconfiguration Complete message, which contains the SN RRC response message.

In step 713, the RAN node 1 forwards the NAS message received from the UE 3 to the AMF 31. This NAS message contains the PDU Session ID and an N1 SM container (PDU Session Modification Command Ack). The N2 message in step 713 may be an UPLINK NAS TRANSPORT message.

In step 714, the AMF 31 forwards the N1 SM container (PDU Session Modification Command Ack) to the SMF 32. The AMF 31 may perform an Nsmf_PDUSession_UpdateSMContext.

Steps 712 to 714 may be performed before steps 710 and 711.

In step 715, the SMF 32 sends a response to the request for updated or new SM policy information in step 704 to the PCF 34. The SMF 32 may perform an Npcf_SMPolicyControl_UpdateNotify response.

### Fifth Embodiment

A configuration example of a radio communication network pertaining to this embodiment is similar to that described with reference to Figure 1. This embodiment provides a specific example of the operation of the UE 3, RAN 10, 5GC 30, and AF 41.

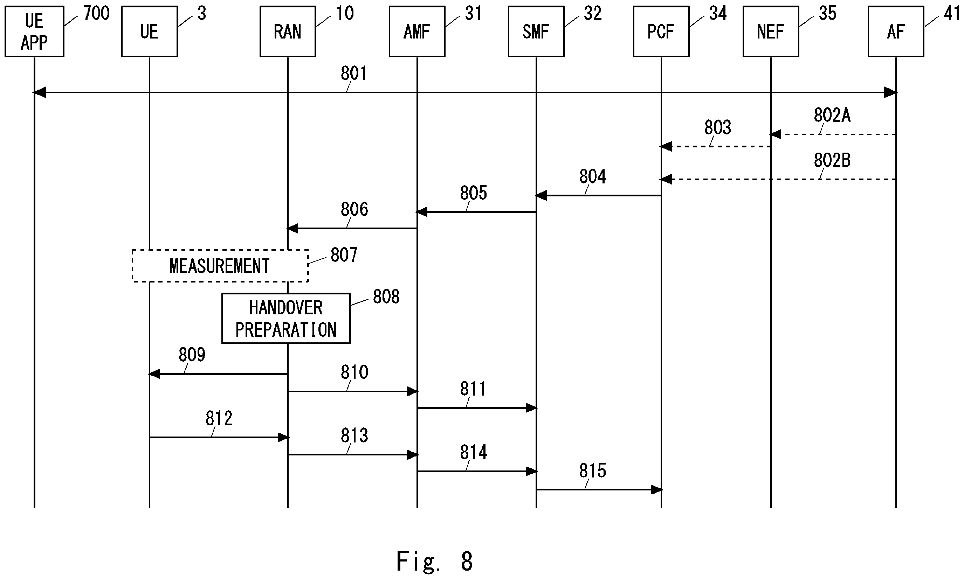

Figure 8 shows an example of signaling to perform a handover based on a request from the AF 41. Steps 801 to 808 are similar to 701 to 708 in Figure 7. However, in step 808, the RAN node 1 receives an N2 request from the AMF 31 and decides to hand over the UE 3 from the cell 11 to the cell 12. The RAN node 1 then communicates with the RAN node 2 and performs a handover preparation procedure.

In step 809, the source RAN node 1 forwards a Handover Command message received from the target RAN node 2 to the UE 3.

In step 810, the RAN node 1 or the RAN node 2 sends an N2 response to the AMF 31. The N2 response may be a PDU SESSION RESOURCE MODIFY RESPONSE message. The N2 response contains N2 SM information. This N2 SM information includes AN Tunnel Info that indicates an N3 (GTP-U) tunnel endpoint of the RAN Node 2, which provides the target cell 12.

In step 811, the AMF 31 forwards the N2 SM information received from the RAN node 1 to the SMF 32, and the SMF 32updates the UPF 33 based on the received N2 SM information.

In step 812, the UE 3 accesses the RAN node 2 via the target cell 12 and sends a NAS message. This NAS message contains the PDU Session ID and an N1 SM container (PDU Session Modification Command Ack).

In step 713, the RAN node 2 forwards the NAS message received from the UE 3 to the AMF 31. This NAS message contains the PDU Session ID and the N1 SM container (PDU Session Modification Command Ack). The N2 message in step 713 may be an UPLINK NAS TRANSPORT message.

In step 814, the AMF 31 forwards the N1 SM container (PDU Session Modification Command Ack) to the SMF 32. The AMF 31 may perform an Nsmf_PDUSession_UpdateSMContext.

Steps 812 to 814 may be performed before steps 810 and 711.

In step 815, the SMF 32 sends a response to the request for updated or new SM policy information in step 804 to the PCF 34. The SMF 32 may perform an Npcf_SMPolicyControl_UpdateNotify response.

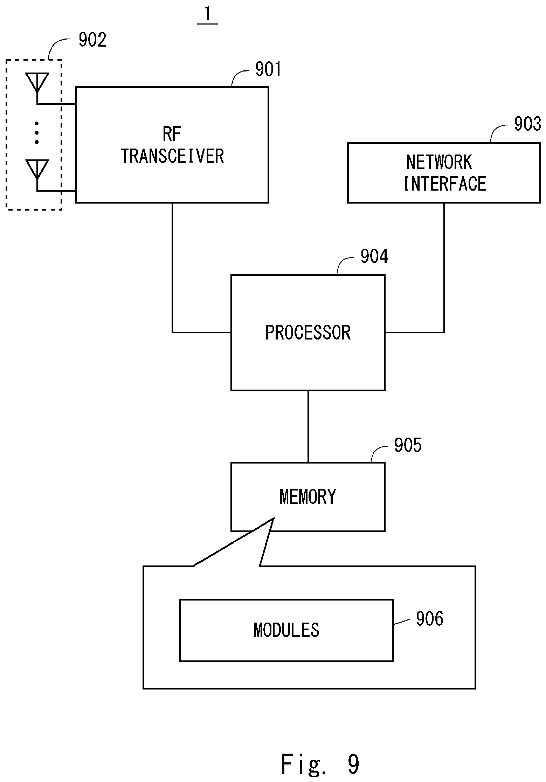

The following provides configuration examples of the RAN node 1, RAN node 2, UE 3, control-plane nodes (e.g., SMF 32) in the 5GC 30, and AF 41 according to the above-described embodiments. Figure 9 is a block diagram showing a configuration example of the RAN node 1 according to the above-described embodiments. The RAN node 2 may have a configuration similar to that shown in Figure 9. Referring to Figure 9, the RAN node 1 includes a Radio Frequency (RF) transceiver 901, a network interface 903, a processor 904, and a memory 905. The RF transceiver 901 performs analog RF signal processing to communicate with UEs. The RF transceiver 901 may include a plurality of transceivers. The RF transceiver 901 is coupled to an antenna array 902 and the processor 904. The RF transceiver 901 receives modulated symbol data from the processor 904, generates a transmission RF signal, and supplies the transmission RF signal to the antenna array 902. Further, the RF transceiver 901 generates a baseband reception signal based on a reception RF signal received by the antenna array 902 and supplies the baseband reception signal to the processor 904. The RF transceiver 901 may include an analog beamformer circuit for beam forming. The analog beamformer circuit includes, for example, a plurality of phase shifters and a plurality of power amplifiers.

The network interface 903 is used to communicate with network nodes (e.g., other RAN nodes, AMF 31, and UPF 33). The network interface 903 may include, for example, a network interface card (NIC) conforming to the IEEE 802.3 series.

The processor 904 performs digital baseband signal processing (i.e., data-plane processing) and control-plane processing for radio communication. The processor 904 may include a plurality of processors. The processor 904 may include, for example, a modem processor (e.g., a Digital Signal Processor (DSP)) that performs digital baseband signal processing and a protocol stack processor (e.g., a Central Processing Unit (CPU) or a Micro Processing Unit (MPU)) that performs the control-plane processing.

The digital baseband signal processing by the processor 904 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. The control-plane processing performed by the processor 904 may include processing of Non-Access Stratum (NAS) messages, RRC messages, MAC CEs, and DCIs.

The processor 904 may include a digital beamformer module for beam forming. The digital beamformer module may include a Multiple Input Multiple Output (MIMO) encoder and a pre-coder.

The memory 905 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 905 may include a storage located apart from the processor 904. In this case, the processor 904 may access the memory 905 via the network interface 903 or an I/O interface (not illustrated).

The memory 905 may store one or more software modules (computer programs) 906 including instructions and data to perform processing by the RAN node 1 described in the above embodiments. In some implementations, the processor 904 may be configured to load the software modules 906 from the memory 905 and execute the loaded software modules, thereby performing processing of the RAN node 1 described in the above embodiments.

When the RAN node 1 is a Central Unit (e.g., gNB-CU) in the C-RAN deployment, the RAN node 1 does not need to include the RF transceiver 901 (and the antenna array 902).

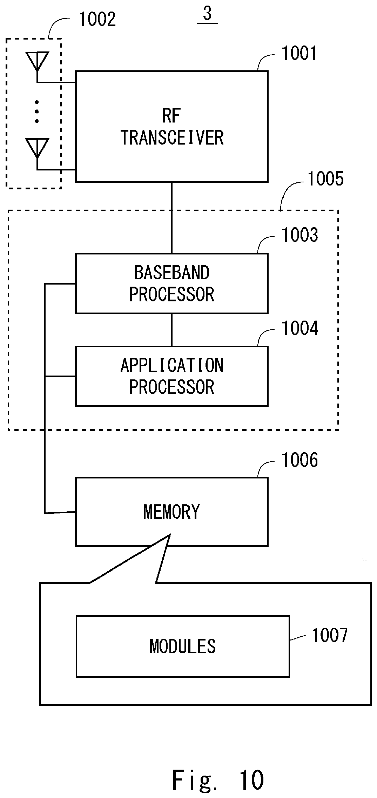

Figure 10 is a block diagram showing a configuration example of the UE 3. A Radio Frequency (RF) transceiver 1001 performs analog RF signal processing to communicate with NG-RAN nodes. The RF transceiver 1001 may include a plurality of transceivers. The analog RF signal processing performed by the RF transceiver 1001 includes frequency up-conversion, frequency down-conversion, and amplification. The RF transceiver 1001 is coupled to an antenna array 1002 and a baseband processor 1003. The RF transceiver 1001 receives modulated symbol data (or OFDM symbol data) from the baseband processor 1003, generates a transmission RF signal, and supplies the transmission RF signal to the antenna array 1002.
Further, the RF transceiver 1001 generates a baseband reception signal based on a reception RF signal received by the antenna array 1002 and supplies the baseband reception signal to the baseband processor 1003. The RF transceiver 1001 may include an analog beamformer circuit for beam forming. The analog beamformer circuit includes, for example, a plurality of phase shifters and a plurality of power amplifiers.

The baseband processor 1003 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1003 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1003 may include processing of Non-Access Stratum (NAS) protocols, Radio Resource Control (RRC) protocols, and MAC Control Elements (CEs).

The baseband processor 1003 may perform Multiple Input Multiple Output (MIMO) encoding and pre-coding for beam forming.

The baseband processor 1003 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1004 described in the following.

The application processor 1004 is also referred to as a CPU, an MPU, a microprocessor, or a processor core. The application processor 1004 may include a plurality of processors (or processor cores). The application processor 1004 loads a system software program (Operating System (OS)) and various application programs (e.g., a call application, a WEB browser, a mailer, a camera operation application, and a music player application) from a memory 1006 or from another memory (not illustrated) and executes these programs, thereby providing various functions of the UE 3.

In some implementations, as represented by a dashed line (1005) in Figure 10, the baseband processor 1003 and the application processor 1004 may be integrated on a single chip. In other words, the baseband processor 1003 and the application processor 1004 may be implemented in a single System on Chip (SoC) device 1005. An SoC device may be referred to as a Large-Scale Integration (LSI) or a chipset.

The memory 1006 is a volatile memory, a non-volatile memory, or a combination thereof. The memory 1006 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1006 may include, for example, an external memory device that can be accessed from the baseband processor 1003, the application processor 1004, and the SoC 1005. The memory 1006 may include an internal memory device that is integrated in the baseband processor 1003, the application processor 1004, or the SoC 1005. Further, the memory 1006 may include a memory in a Universal Integrated Circuit Card (UICC).

The memory 1006 may store one or more software modules (computer programs) 1007 including instructions and data to perform the processing by the UE 3 described in the above embodiments. In some implementations, the baseband processor 1003 or the application processor 1004 may load these software modules 1007 from the memory 1006 and execute the loaded software modules, thereby performing the processing of the UE 3 described in the above embodiments with reference to the drawings.

The control-plane processing and operations performed by the UE 3 described in the above embodiments can be achieved by elements other than the RF transceiver 1001 and the antenna array 1002, i.e., achieved by the memory 1006, which stores the software modules 1007, and one or both of the baseband processor 1003 and the application processor 1004.

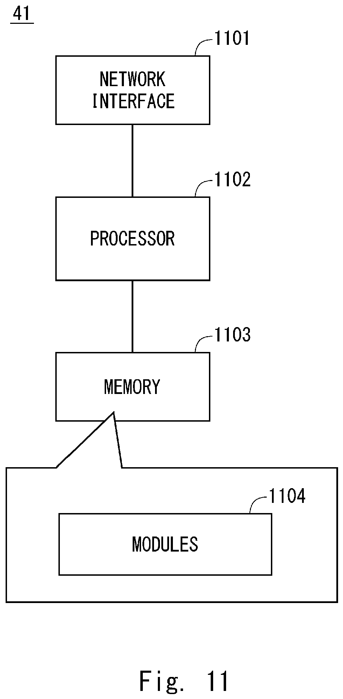

Figure 11 is a block diagram showing a configuration example of the AF 41. The control plane nodes within the 5GC 30 (e.g., AMF 31, SMF 32, PCF 34, and NEF 35) may also have a configuration similar to that shown in Figure 11. Referring to Figure 11, the AF 41 includes a network interface 1101, a processor 1102, and a memory 1103. The network interface 1101 is used to communicate, for example, with the DN 50 and with network functions (NFs) or nodes in the 5GC. The NFs or nodes in the 5GC include, for example, UDM, AUSF, SMF, and PCF. The network interface 1101 may include, for example, a network interface card (NIC) conforming to the IEEE 802.3 series.

The processor 1102 may be, for example, a microprocessor, a Micro Processing Unit (MPU), or a Central Processing Unit (CPU). The processor 1102 may include a plurality of processors.

The memory 1103 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1103 may include a storage located apart from the processor 1102. In this case, the processor 1102 may access the memory 1103 via the network interface 1101 or an I/O interface (not illustrated).

The memory 1103 may store one or more software modules (computer programs) 1104 including instructions and data to perform the processing of the AF 41 described in the above embodiments. In some implementations, the processor 1102 may be configured to load the one or more software modules 1104 from the memory 1103 and execute the loaded software modules, thereby performing the processing of the AF 41 described in the above embodiments.

As described above with reference to Figures 9, 10 and 11, each of the processors that the RAN node 1, RAN node 2, control-plane nodes (e.g., SMF 32) in the 5GC 30, and AF 41 according to the above embodiments include executes one or more programs including instructions for causing a computer to execute an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

### Other Embodiments

Each of the above embodiments may be used individually, or whole or a part of the embodiments may be appropriately combined with one another.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A Policy Control Function (PCF) apparatus comprising:
means for receiving information for modifying a policy from a Network Exposure Function (NEF) apparatus or an Application Function (AF) apparatus, the policy including an Index to RAT/Frequency Selection Priority (RFSP index); and
means for modifying the policy based on the information.

### (Supplementary Note 2)

The PCF apparatus according to Supplementary Note 1, wherein the information includes request information related to traffic for a specific application.

### (Supplementary Note 3)

The PCF apparatus according to Supplementary Note 1 or 2, wherein the information includes an identifier of a user equipment (UE).

### (Supplementary Note 4)

The PCF apparatus according to any one of Supplementary Notes 1 to 3, wherein the information includes a Data Network Name (DNN).

### (Supplementary Note 5)

The PCF apparatus according to any one of Supplementary Notes 1 to 4, wherein the information includes a Single Network Slice Selection Assistance Information (S-NSSAI).

### (Supplementary Note 6)

The PCF apparatus according to Supplementary Note 3, wherein the identifier of the UE includes information regarding a Generic Public Subscription Identifier (GPSI).

### (Supplementary Note 7)

An Application Function (AF) apparatus comprising:
means for communicating with a Network Function (NF) apparatus; and
means for sending information for modifying a policy, the policy including an Index to RAT/Frequency Selection Priority (RFSP index).

### (Supplementary Note 8)

The AF apparatus according to Supplementary Note 7, wherein the information includes request information related to traffic for a specific application.

### (Supplementary Note 9)

The AF apparatus according to Supplementary Note 7 or 8, wherein the information includes an identifier of a user equipment (UE).

### (Supplementary Note 10)

The AF apparatus according to any one of Supplementary Notes 7 to 9, wherein the information includes a Data Network Name (DNN).

### (Supplementary Note 11)

The AF apparatus according to any one of Supplementary Notes 7 to 10, wherein the information includes a Single Network Slice Selection Assistance Information (S-NSSAI).

### (Supplementary Note 12)

The AF apparatus according to Supplementary Note 9, wherein the identifier of the UE includes a Generic Public Subscription Identifier (GPSI).

### (Supplementary Note 13)

The AF apparatus according to any one of Supplementary Notes 7 to 12, wherein the means for sending is configured to send the information to a Network Exposure Function (NEF) apparatus or a Policy Control (PCF) apparatus.

### (Supplementary Note 14)

A Network Exposure Function (NEF) apparatus comprising:
means for receiving information for modifying a policy from an Application Function (AF) apparatus, the policy including an Index to RAT/Frequency Selection Priority (RFSP index); and
means for sending the information.

### (Supplementary Note 15)

The NEF apparatus according to Supplementary Note 14, wherein the information includes request information related to traffic for a specific application.

### (Supplementary Note 16)

The NEF apparatus according to Supplementary Note 14 or 15, wherein the information includes an identifier of a user equipment (UE).

### (Supplementary Note 17)

The NEF apparatus according to any one of Supplementary Notes 14 to 16, wherein the information includes a Data Network Name (DNN).

### (Supplementary Note 18)

The NEF apparatus according to any one of Supplementary Notes 14 to 17, wherein the information includes a Single Network Slice Selection Assistance Information (S-NSSAI).

### (Supplementary Note 19)

The NEF apparatus according to Supplementary Note 16, wherein the identifier of the UE includes information regarding a Generic Public Subscription Identifier (GPSI).

### (Supplementary Note 20)

The NEF apparatus according to any one of Supplementary Notes 14 to 19, wherein the means for sending is configured to send the information to a Policy Control Function (PCF) apparatus.

### (Supplementary Note 21)

A method of a Policy Control Function (PCF) apparatus, the method comprising:
receiving information for modifying a policy from a Network Exposure Function (NEF) apparatus or an Application Function (AF) apparatus, the policy including an Index to RAT/Frequency Selection Priority (RFSP index); and
modifying the policy based on the information.

### (Supplementary Note 22)

The method according to Supplementary Note 21, wherein the information includes request information related to traffic for a specific application.

### (Supplementary Note 23)

The method according to Supplementary Note 21 or 22, wherein the information includes an identifier of a user equipment (UE).

### (Supplementary Note 24)

The method according to any one of Supplementary Notes 21 to 23, wherein the information includes a Data Network Name (DNN).

### (Supplementary Note 25)

The method according to any one of Supplementary Notes 21 to 24, wherein the information includes a Single Network Slice Selection Assistance Information (S-NSSAI).

### (Supplementary Note 26)

The method according to Supplementary Note 23, wherein the identifier of the UE includes information regarding a Generic Public Subscription Identifier (GPSI).

### (Supplementary Note 27)

A method of an Application Function (AF) apparatus, the method comprising:
communicating with a Network Function (NF) apparatus; and
sending information for modifying a policy, the policy including an Index to RAT/Frequency Selection Priority (RFSP index).

### (Supplementary Note 28)

The method according to Supplementary Note 27, wherein the information includes request information related to traffic for a specific application.

### (Supplementary Note 29)

The method according to Supplementary Note 27 or 28, wherein the information includes an identifier of a user equipment (UE).

### (Supplementary Note 30)

The method according to any one of Supplementary Notes 27 to 29, wherein the information includes a Data Network Name (DNN).

### (Supplementary Note 31)

The method according to any one of Supplementary Notes 27 to 30, wherein the information includes a Single Network Slice Selection Assistance Information (S-NSSAI).

### (Supplementary Note 32)

The method according to Supplementary Note 29, wherein the identifier of the UE includes a Generic Public Subscription Identifier (GPSI).

### (Supplementary Note 33)

The method according to any one of Supplementary Notes 27 to 32, wherein the sending includes sending the information to a Network Exposure Function (NEF) apparatus or a Policy Control (PCF) apparatus.

### (Supplementary Note 34)

A method of a Network Exposure Function (NEF) apparatus, the method comprising: receiving information for modifying a policy from an Application Function (AF) apparatus, the policy including an Index to RAT/Frequency Selection Priority (RFSP index); and
sending the information.

### (Supplementary Note 35)

The method according to Supplementary Note 34, wherein the information includes request information related to traffic for a specific application.

### (Supplementary Note 36)

The method according to Supplementary Note 34 or 35, wherein the information includes an identifier of a user equipment (UE).

### (Supplementary Note 37)

The method according to any one of Supplementary Notes 34 to 36, wherein the information includes a Data Network Name (DNN).

### (Supplementary Note 38)

The method according to any one of Supplementary Notes 34 to 37, wherein the information includes a Single Network Slice Selection Assistance Information (S-NSSAI).

### (Supplementary Note 39)

The method according to Supplementary Note 36, wherein the identifier of the UE includes information regarding a Generic Public Subscription Identifier (GPSI).

### (Supplementary Note 40)

The method according to any one of Supplementary Notes 34 to 39, wherein the sending includes sending the information to a Policy Control Function (PCF) apparatus.

### (Supplementary Note B1)

An Application Function (AF) apparatus comprising:
at least one memory; and
at least one processor coupled to the at least one memory and configured to send a first message to a core network,
wherein the first message requests the core network to set up or modify a user plane path to ensure that user data for a User Equipment (UE) is transferred via the user plane path that includes a radio connection in a specific cell.

### (Supplementary Note B2)

The AF apparatus according to Supplementary Note B1, wherein the first message causes the core network to control a radio access network (RAN) to add the specific cell as a secondary cell of dual connectivity for the UE.

### (Supplementary Note B3)

The AF apparatus according to Supplementary Note B1, wherein the first message causes the core network to control a radio access network (RAN) to hand over the UE to the specific cell.

### (Supplementary Note B4)

The AF apparatus according to any one of Supplementary Notes B1 to B3, wherein the first message contains at least one of a first identifier representing the specific cell and a second identifier representing a frequency band in which the specific cell operates.

### (Supplementary Note B5)

The AF apparatus according to Supplementary Note B4, wherein the first message further contains a measurement result of the specific cell by the UE.

### (Supplementary Note B6)

The AF apparatus according to Supplementary Note B4 or B5, wherein the first message further contains location information of the UE.

### (Supplementary Note B7)

The AF apparatus according to any one of Supplementary Notes B1 to B6, wherein the first message contains at least one of an Index to RAT/Frequency Selection Priority (RFSP index) and an Additional Radio Resource Management (RRM) Policy Index (ARPI).

### (Supplementary Note B8)

The AF apparatus according to any one of Supplementary Notes B1 to B7, wherein the at least one processor is configured to send the first message in response to determining that the specific cell is available to the UE based on a report from the UE via communication in an application layer.

### (Supplementary Note B9)

The AF apparatus according to Supplementary Note B8, wherein the report includes at least one of location information of the UE, an identifier of a cell with which the UE is in communication, one or more identifiers of one or more cells discovered by the UE, and a measurement result of one or more cells by the UE.

### (Supplementary Note B10)

The AF apparatus according to any one of Supplementary Notes B1 to B9, wherein the user data is one or more Quality of Service (QoS) flows included in a protocol data unit (PDU) session.

### (Supplementary Note B11)

A core network apparatus comprising:
at least one memory; and
at least one processor coupled to the at least one memory and configured to:
   receive from another core network node a second message based on a request from an Application Function (AF); and
   in response to the second message, request a radio access network (RAN) to set up or modify a user plane path to ensure that user data for a User Equipment (UE) is transferred via the user plane path that includes a radio connection in a specific cell.

### (Supplementary Note B12)

The core network apparatus according to Supplementary Note B11, wherein the at least one processor is configured to send Session Management (SM) information, including at least one of a first identifier representing a particular cell and a second identifier representing a frequency band in which the particular cell operates, to the RAN to request modification of the user plane path.

### (Supplementary Note B13)

The core network apparatus according to Supplementary Note B12, wherein the SM information further includes a measurement result of the specific cell by the UE.

### (Supplementary Note B14)

The core network apparatus according to Supplementary Note B12 or B13, wherein the at least one processor is configured to receive at least one of the first identifier and the second identifier from the AF via the other core network node.

### (Supplementary Note B15)

The core network apparatus according to any one of Supplementary Notes B11 to B14, wherein the setting up or modifying the user plane path includes adding the specific cell as a secondary cell of dual connectivity for the UE.

### (Supplementary Note B16)

The core network apparatus according to any one of Supplementary Notes B11 to B14, wherein the setting up or modifying the user plane path includes handing over the UE to the specific cell.

### (Supplementary Note B17)

The core network apparatus according to any one of Supplementary Notes B11 to B16, wherein the user data is one or more Quality of Service (QoS) flows included in a protocol data unit (PDU) session.

### (Supplementary Note B18)

The core network apparatus according to any one of Supplementary Notes B11 to B17, wherein
the core network apparatus is a Session Management Function (SMF),
the other core network node is a Policy Control Function (PCF), and
the at least one processor is configured to request the RAN to set up or modify the user plane path via an Access and Mobility management Function (AMF).

### (Supplementary Note B19)

A method performed by an Application Function (AF) apparatus, the method comprising sending a first message to a core network,
wherein the first message requests the core network to set up or modify a user plane path to ensure that user data for a User Equipment (UE) is transferred via the user plane path that includes a radio
connection in a specific cell.

### (Supplementary Note B20)

A method performed by a core network apparatus, the method comprising:
receiving from another core network node a second message based on a request from an Application Function (AF); and
in response to the second message, requesting a radio access network (RAN) to set up or modify a user plane path to ensure that user data for a User Equipment (UE) is transferred via the user plane path that includes a radio connection in a specific cell.

This application is based upon and claims the benefit of priority from Japanese Patent Application No. 2020-078448, filed on April 27, 2020, the disclosure of which is incorporated herein in its entirety by reference.

### Reference Signs List

- 1: RAN Node
- 2: RAN Node
- 3: UE
- 10: RAN
- 11, 12: Cell
- 30: 5GC
- 31: AMF
- 32: SMF
- 33, 33A, 33B: UPF
- 34: PCF
- 3 5: NEF
- 41: AF
- 50, 50A, 50B: DN
- 905: Memory
- 906: Modules
- 1003: Baseband Processor
- 1004: Application Processor
- 1007: Modules
- 1103: Memory
- 1104: Modules

## Claims

1. A Policy Control Function (PCF) apparatus comprising:
means for receiving information for modifying a policy from a Network Exposure Function (NEF) apparatus or an Application Function (AF) apparatus, the policy including an Index to RAT/Frequency Selection Priority (RFSP index); and
means for modifying the policy based on the information.

2. The PCF apparatus according to claim 1, wherein the information includes request information related to traffic for a specific application.

3. The PCF apparatus according to claim 1 or 2, wherein the information includes an identifier of a user equipment (UE).

4. The PCF apparatus according to any one of claims 1 to 3, wherein the information includes a Data Network Name (DNN).

5. The PCF apparatus according to any one of claims 1 to 4, wherein the information includes a Single Network Slice Selection Assistance Information (S-NSSAI).

6. The PCF apparatus according to claim 3, wherein the identifier of the UE includes information regarding a Generic Public Subscription Identifier (GPSI).

7. An Application Function (AF) apparatus comprising:
means for communicating with a Network Function (NF) apparatus; and
means for sending information for modifying a policy, the policy including an Index to RAT/Frequency Selection Priority (RFSP index).

8. The AF apparatus according to claim 7, wherein the information includes request information related to traffic for a specific application.

9. The AF apparatus according to claim 7 or 8, wherein the information includes an identifier of a user equipment (UE).

10. The AF apparatus according to any one of claims 7 to 9, wherein the information includes a Data Network Name (DNN).

11. The AF apparatus according to any one of claims 7 to 10, wherein the information includes a Single Network Slice Selection Assistance Information (S-NSSAI).

12. The AF apparatus according to claim 9, wherein the identifier of the UE includes a Generic Public Subscription Identifier (GPSI).

13. The AF apparatus according to any one of claims 7 to 12, wherein the means for sending is configured to send the information to a Network Exposure Function (NEF) apparatus or a Policy Control (PCF) apparatus.

14. A Network Exposure Function (NEF) apparatus comprising:
means for receiving information for modifying a policy from an Application Function (AF) apparatus, the policy including an Index to RAT/Frequency Selection Priority (RFSP index); and
means for sending the information.

15. The NEF apparatus according to claim 14, wherein the information includes request information related to traffic for a specific application.

16. The NEF apparatus according to claim 14 or 15, wherein the information includes an identifier of a user equipment (UE).

17. The NEF apparatus according to any one of claims 14 to 16, wherein the information includes a Data Network Name (DNN).

18. The NEF apparatus according to any one of claims 14 to 17, wherein the information includes a Single Network Slice Selection Assistance Information (S-NSSAI).

19. The NEF apparatus according to claim 16, wherein the identifier of the UE includes information regarding a Generic Public Subscription Identifier (GPSI).

20. The NEF apparatus according to any one of claims 14 to 19, wherein the means for sending is configured to send the information to a Policy Control Function (PCF) apparatus.

21. A method of a Policy Control Function (PCF) apparatus, the method comprising:
receiving information for modifying a policy from a Network Exposure Function (NEF) apparatus or an Application Function (AF) apparatus, the policy including an Index to RAT/Frequency Selection Priority (RFSP index); and
modifying the policy based on the information.

22. The method according to claim 21, wherein the information includes request information related to traffic for a specific application.

23. The method according to claim 21 or 22, wherein the information includes an identifier of a user equipment (UE).

24. The method according to any one of claims 21 to 23, wherein the information includes a Data Network Name (DNN).

25. The method according to any one of claims 21 to 24, wherein the information includes a Single Network Slice Selection Assistance Information (S-NSSAI).

26. The method according to claim 23, wherein the identifier of the UE includes information regarding a Generic Public Subscription Identifier (GPSI).

27. A method of an Application Function (AF) apparatus, the method comprising:
communicating with a Network Function (NF) apparatus; and
sending information for modifying a policy, the policy including an Index to RAT/Frequency Selection Priority (RFSP index).

28. The method according to claim 27, wherein the information includes request information related to traffic for a specific application.

29. The method according to claim 27 or 28, wherein the information includes an identifier of a user equipment (UE).

30. The method according to any one of claims 27 to 29, wherein the information includes a Data Network Name (DNN).

31. The method according to any one of claims 27 to 30, wherein the information includes a Single Network Slice Selection Assistance Information (S-NSSAI).

32. The method according to claim 29, wherein the identifier of the UE includes a Generic Public Subscription Identifier (GPSI).

33. The method according to any one of claims 27 to 32, wherein the sending includes sending the information to a Network Exposure Function (NEF) apparatus or a Policy Control (PCF) apparatus.

34. A method of a Network Exposure Function (NEF) apparatus, the method comprising:
receiving information for modifying a policy from an Application Function (AF) apparatus, the policy including an Index to RAT/Frequency Selection Priority (RFSP index); and
sending the information.

35. The method according to claim 34, wherein the information includes request information related to traffic for a specific application.

36. The method according to claim 34 or 35, wherein the information includes an identifier of a user equipment (UE).

37. The method according to any one of claims 34 to 36, wherein the information includes a Data Network Name (DNN).

38. The method according to any one of claims 34 to 37, wherein the information includes a Single Network Slice Selection Assistance Information (S-NSSAI).

39. The method according to claim 36, wherein the identifier of the UE includes information regarding a Generic Public Subscription Identifier (GPSI).

40. The method according to any one of claims 34 to 39, wherein the sending includes sending the information to a Policy Control Function (PCF) apparatus.
